# EUROPEAN PATENT APPLICATION

(11) **EP 4 723 359 A1**
(43) Date of publication of application: **08.04.2026**
(21) Application number: 24864216.7
(22) Date of filing: 02.07.2024
(51) Int. Cl.: H01M 50/552, H01M 50/172, H01M 50/567, H01M 10/052

(54) **BATTERY CELL, BATTERY, AND ELECTRICAL DEVICE**

(30) Priority: 12.09.2023 CN 202322470098 U
(71) Applicant: Contemporary Amperex Technology Co., Limited, Ningde, Fujian 352100 (CN)
(72) Inventor: SU, Huasheng, Ningde, Fujian 352100 (CN)
(74) Representative: Gong, Jinping
(86) International application number: PCT/CN2024/103070
(87) International publication number: WO 2025/055491

(57) **Abstract**

A battery cell (200), a battery (B), and an electric device are provided. The battery cell (200) has a battery housing (220), where a pole assembly (100) is disposed on a first wall (210) of the battery housing (220), the pole assembly (100) includes a pole body (110), and the pole body (110) includes: a bearing portion (111), the bearing portion (111) being inserted through a mounting hole (211) of the first wall (210); and a bending portion (112), the bending portion (112) being connected to one end of the bearing portion (111) in a central axis direction (C), bent relative to the bearing portion (111), and disposed on one side of the first wall (210), and a bending resistance strength of the bending portion (112) being less than a bending resistance strength of the bearing portion (111). The battery (B) includes the battery cell described above. The electric device includes the battery (B) described above.

## Description

### CROSS-REFERENCE TO RELATED APPLICATIONS

This disclosure is based on Chinese Application No. 202322470098.4, filed on September 12, 2023, and claims its priority, the disclosure content of the above Chinese application is fully incorporated into this application by reference.

### TECHNICAL FIELD

This application relates to the field of battery technologies, and in particular, to a battery cell, a battery, and an electric device.

### BACKGROUND

Energy saving and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

In the related art, a pole assembly is configured to achieve electrical connection between the interior and exterior of a battery cell. When the pole assembly is disposed on the battery cell, for example, through riveting or other ways, poor riveting may sometimes occur during the riveting process. Poor riveting of the pole assembly directly affects the safety and reliability of the battery cell and a battery containing such battery cell. Therefore, whether the pole assembly can be smoothly riveted to the battery cell has become an issue.

### SUMMARY

In view of the preceding problems, one of the objectives of the embodiments of this application is to provide a battery cell, a battery, and an electric device, which can help to smoothly position a pole assembly on the battery cell through riveting or other ways, thereby increasing the yield rate when the pole assembly is disposed.

According to a first aspect, this application provides a battery cell having a battery housing, where a pole assembly is disposed on a first wall of the battery housing, the pole assembly includes a pole body, and the pole body includes: a bearing portion, the bearing portion being inserted through a mounting hole of the first wall; and a bending portion, the bending portion being connected to one end of the bearing portion in a central axis direction of the bearing portion, bent relative to the bearing portion, and disposed on one side of the first wall, and a bending resistance strength of the bending portion being less than a bending resistance strength of the bearing portion.

In the battery cell of this disclosure, since the bending resistance strength of the bending portion in the pole body is less than the bending resistance strength of the bearing portion, during riveting of the pole body, the bending portion is more easily bent by riveting compared to the bearing portion. In this case, without applying excessive riveting pressure, the bending portion can be bent and brought into contact with the first wall of the battery cell, which can help to smoothly position the pole assembly on the first wall of the battery cell through riveting or other ways, and can also help to reduce the occurrence of damage to components around the pole body due to excessive riveting pressure, thereby increasing the yield rate during the positioning of the pole assembly.

In some embodiments, a minimum thickness of the bearing portion is greater than a maximum thickness of the bending portion.

By making the minimum thickness of the bearing portion greater than the maximum thickness of the bending portion, the bending resistance strength of the bending portion can be made less than the bending resistance strength of the bearing portion. Consequently, during riveting of the pole body, without applying excessive riveting pressure, the bending portion can be bent and brought into contact with the first wall of the battery housing, which can help to reduce issues of poor riveting due to excessive riveting pressure.

In some embodiments, a ratio of the maximum thickness of the bending portion to the minimum thickness of the bearing portion is within a range of 0 to 0.85.

By making the ratio of the maximum thickness of the bending portion to the minimum thickness of the bearing portion within a range of 0 to 0.85, the bending resistance strength of the bending portion can be effectively ensured to be less than the bending resistance strength of the bearing portion, thereby making the bending portion more prone to bending deformation relative to the bearing portion during the riveting process.

In some embodiments, the ratio of the maximum thickness of the bending portion to the minimum thickness of the bearing portion is within a range of 0.3 to 0.7.

By making the ratio of the maximum thickness of the bending portion to the minimum thickness of the bearing portion within a range of 0.3 to 0.7, the bending resistance strength of the bending portion can be further effectively ensured to be less than the bending resistance strength of the bearing portion, thereby more reliably ensuring that the bending portion is more prone to bending deformation relative to the bearing portion during the riveting process.

In some embodiments, a thinning groove is disposed on at least one side of the bending portion in a direction substantially perpendicular to the central axis direction.

By disposing a thinning groove on at least one side of the bending portion in a direction substantially perpendicular to the central axis direction, the bending resistance strength of the bending portion can be made less than the bending resistance strength of the bearing portion, and the bending portion is made more prone to bending deformation relative to the bearing portion. Moreover, when a thinning groove is disposed on an outer side of the bending portion in the direction substantially perpendicular to the central axis direction, a convex step surface is formed between an outer peripheral surface of the bearing portion and an outer peripheral surface of the bending portion, meaning that a convex step surface is formed on an outer peripheral surface of the pole body, which can provide positioning support for the bending portion during riveting of the bending portion. Furthermore, when a thinning groove is disposed on an inner side of the bending portion in the direction substantially perpendicular to the central axis direction, a convex step surface is formed between an inner peripheral surface of the bearing portion and an inner peripheral surface of the bending portion. In this way, for example, during riveting, the convex step surface between the bearing portion and the bending portion can provide support for a rivet, which can reduce the possibility of the rivet advancing further and causing deformation of the bearing portion.

In some embodiments, a bending resistance reinforcement portion is disposed on the bearing portion.

By disposing a bending resistance reinforcement portion on the bearing portion, the bending resistance strength of the bearing portion can be enhanced. Thus, even if a large force is applied to the pole body to reliably bend the bending portion, the bending resistance reinforcement portion supports the bearing portion, preventing significant deformation of the bearing portion that could damage surrounding components, thereby increasing the yield rate during the positioning of the pole assembly.

In some embodiments, the bending resistance reinforcement portion includes a flange portion extending from an inner surface of the bearing portion toward a center of the bearing portion.

Since the bending resistance reinforcement portion disposed on the bearing portion includes a flange portion extending from the inner surface of the bearing portion toward the center of the bearing portion, the flange portion can help to reduce bending deformation of the bearing portion when the bearing portion is subjected to a force in a direction substantially perpendicular to the central axis direction, thereby helping to ensure that the bearing portion does not undergo significant deformation during riveting.

In some embodiments, the flange portion is disposed on the inner surface of the bearing portion in a manner of surrounding an entire circumference.

Since the flange portion is disposed on the inner surface of the bearing portion in a manner of surrounding an entire circumference, the bearing portion can be uniformly reinforced in a circumferential direction of the bearing portion, which can help to reduce the possibility of inhomogeneous deformation of the bearing portion.

In some embodiments, in the central axis direction, the flange portion is at a certain distance from an end of the bearing portion away from the bending portion.

Since, in the central axis direction, the flange portion is at a certain distance from the end of the bearing portion away from the bending portion, during riveting of the bending portion, if a force in a direction substantially perpendicular to the central axis direction of the bearing portion acts on the bearing portion to cause the bearing portion to expand and bend, the flange portion can effectively pull the bearing portion to prevent its expansion, which can effectively enhance the bending resistance strength of the bearing portion.

In some embodiments, at least a part of the flange portion is located within the mounting hole.

Since at least a part of the flange portion is located within the mounting hole, meaning that the flange portion and the first wall at least partially overlap in a direction substantially perpendicular to the central axis direction, when a large riveting pressure is applied to cause the bearing portion to expand and bend, the flange portion and the first wall of the battery housing can synergistically resist the outward expansion of the bearing portion, which can effectively enhance the bending resistance strength of the bearing portion.

In some embodiments, the pole body further includes a holding portion connected to the bearing portion, the holding portion and the bending portion are respectively disposed on two sides of the first wall, and the flange portion is spaced apart from the holding portion.

By adopting such a structure, the pole body can be stably disposed on the first wall of the battery housing using the holding portion and the bending portion. Additionally, since the flange portion is spaced apart from the holding portion, during riveting of the bending portion, the flange portion can effectively resist the force generated by riveting that causes the bearing portion and the holding portion to expand and bend, which can effectively enhance the bending resistance strength of the bearing portion and the holding portion.

In some embodiments, the bending resistance reinforcement portion includes reinforcing ribs disposed on an inner side of the bearing portion, the reinforcing ribs extend in the central axis direction, and a plurality of the reinforcing ribs are disposed at intervals along a circumferential direction of the bearing portion.

By disposing reinforcing ribs on the inner side of the bearing portion, making the reinforcing ribs extend in the central axis direction, and disposing a plurality of the reinforcing ribs at intervals along the circumferential direction of the bearing portion, the reinforcing ribs can be used to effectively resist a force causing the bearing portion to expand in a direction substantially perpendicular to the central axis direction.

In some embodiments, the reinforcing ribs extend to a connection portion between the bearing portion and the bending portion.

Since the reinforcing ribs extend to the connection portion between the bearing portion and the bending portion, meaning that one end of the reinforcing ribs corresponds to an end of the bearing portion connected to the bending portion, the reinforcing ribs can be used to effectively resist a force causing the bearing portion to expand in a direction substantially perpendicular to the central axis direction, while, for example, during riveting using a rivet, an end surface of the reinforcing ribs can also provide support for the rivet, which can reduce the possibility of the rivet advancing further and causing deformation of the bearing portion.

In some embodiments, a bending resistance weakening portion is disposed at a connection portion between the bending portion and the bearing portion, and the bending portion is bent from the bending resistance weakening portion.

By disposing a bending resistance weakening portion at the connection portion between the bending portion and the bearing portion and making the bending portion bend from the bending resistance weakening portion, the possibility of significant deformation of the bearing portion due to riveting pressure can be effectively reduced.

In some embodiments, the bending resistance weakening portion is a bending groove or a connecting member made of a material with lower bending resistance strength.

By disposing a bending groove at the connection portion between the bending portion and the bearing portion, the bending portion is easily bent outward when subjected to riveting pressure, and the bending groove can also accommodate deformation of the bending portion during riveting, which can improve the riveting strength and riveting efficiency of the bending portion, and can also increase the riveting yield rate. Additionally, by disposing a connecting member made of a material with lower bending resistance strength at the connection portion between the bending portion and the bearing portion, it can be effectively ensured that the bending portion is more prone to bending deformation than the bearing portion when subjected to riveting pressure.

In some embodiments, the pole assembly further includes a first insulating member surrounding an outer side of the pole body, and the first insulating member includes a first portion and a second portion, where the first portion is inserted into the mounting hole of the first wall, the second portion is connected to the first portion, and the second portion is sandwiched between the bending portion and the first wall.

By making the first insulating member surround the outer side of the pole body, inserting the first portion of the first insulating member into the mounting hole of the first wall, and sandwiching the second portion between the bending portion and the first wall, the first insulating member can reliably insulate the pole body from the first wall of the battery housing, which can improve the safety and reliability of the battery cell. Additionally, since the second portion of the first insulating member can also provide support when pressing the bent bending portion, the bending portion can be reliably disposed on the first wall of the battery housing.

In some embodiments, an inner peripheral dimension of the second portion is greater than an inner peripheral dimension of the first portion.

By making the inner peripheral dimension of the second portion greater than the inner peripheral dimension of the first portion, when the first insulating member surrounds the outer side of the pole body, the second portion is farther from the pole body. Thus, during riveting, deformation of the bearing portion and the bending portion caused by riveting can be accommodated, which helps to reduce the possibility of the first insulating member being cracked due to excessive stress concentration, thereby effectively improving the riveting efficiency of the pole assembly.

In some embodiments, the bending portion and the bearing portion are connected at a connection surface, the bending portion abuts against an abutting surface of the second portion, and in the central axis direction, a distance between the connection surface and the abutting surface is within a range of -5 mm to +5 mm.

By making the distance between the connection surface of the bending portion and the bearing portion and the abutting surface of the second portion within a range of -5 mm to +5 mm, problems of insufficient pressing or excessive pressing due to an inappropriate distance between the connection surface and the abutting surface can be alleviated, increasing the yield rate when the pole assembly is disposed, and enhancing the safety and reliability of the battery cell.

In some embodiments, the bending portion and the bearing portion are connected at a connection surface, the bending portion abuts against an abutting surface of the second portion, and in the central axis direction, a distance between the connection surface and the abutting surface is within a range of -2 mm to +2 mm.

By making the distance between the connection surface of the bending portion and the bearing portion and the abutting surface of the second portion within a range of -2 mm to +2 mm, problems of insufficient pressing or excessive pressing due to an inappropriate distance between the connection surface and the abutting surface can be further effectively alleviated, allowing the bending portion to be appropriately bent and disposed on the first wall of the battery housing, and further increasing the yield rate when the pole assembly is disposed.

In some embodiments, the second portion is formed with a protruding portion, and the protruding portion surrounds the bending portion.

By making the protruding portion formed on the second portion surround the bending portion, the bent bending portion can be accommodated in an accommodating groove defined by the protruding portion, which can reduce the probability of contact between the bent bending portion and the first wall of the battery housing. The first insulating member can be used to reliably insulate the bearing portion and the bending portion from the first wall of the battery housing, ensuring safety during use.

In some embodiments, the pole body is provided with a holding portion at the other end of the bearing portion in the central axis direction, and the holding portion and the bending portion secure the first wall from two sides.

By providing such a holding portion, the pole body can be stably disposed on the first wall of the battery housing using the holding portion and the bending portion without detachment. This also helps to reduce the possibility of poor contact between the pole body and an electrode assembly of the battery cell, which could render the battery cell unusable.

In some embodiments, the pole assembly further includes a sealing member, where the sealing member is disposed between the holding portion and the first wall, sealing the bearing portion and the first wall.

By disposing a sealing member between the holding portion and the first wall of the battery housing to seal the bearing portion and the first wall, the gap between the bearing portion and the first wall of the battery housing can be sealed, which reduces the possibility of electrolyte leakage from the battery cell through the gap between the bearing portion and the first wall of the battery housing, and can further improve the safety and reliability of the battery cell.

In some embodiments, the holding portion is located inside the battery housing of the battery cell.

Since the holding portion is located inside the battery housing of the battery cell, the bending portion disposed on an outer side of the first wall can be conveniently riveted from the exterior of the battery cell. Compared to a structure where the holding portion is disposed outside the battery housing and the bending portion is disposed inside the battery housing, this can increase the working space during riveting.

In some embodiments, the pole assembly further includes a second insulating member, where the second insulating member is disposed between the holding portion and the first wall.

By disposing the second insulating member, the holding portion and the first wall of the battery housing can be reliably insulated.

In some embodiments, the battery cell further includes an adapter, the pole body is fixed to the adapter, and the adapter electrically connects the pole body and the electrode assembly of the battery cell.

By fixing the pole body to the adapter and using the adapter to electrically connect the pole body and the electrode assembly of the battery cell, the pole body can be electrically connected to the electrode assembly while the adapter provides support for the pole body, enabling the pole body to be stably disposed on the battery cell.

In some embodiments, the battery housing includes a shell and an end cover, and the first wall is the shell and/or the end cover.

By adopting such a structure, since the first wall provided with the pole body may be the shell and/or the end cover of the battery housing, the degree of freedom in design is increased, allowing the position for installing the pole body to be appropriately selected as needed.

In a second aspect, this application provides a battery, where the battery includes the battery cell in the above embodiments.

By having the features of the embodiments of this application, the provided battery can obtain the benefits described for the battery cell.

In a third aspect, this application provides an electric device including the battery in the above embodiments, where the battery is configured to supply power to the electric device.

By having the features of the embodiments of this application, the provided electric device can obtain the benefits described for the battery cell and the battery.

The foregoing description is merely an overview of the technical solution of this application. For a better understanding of the technical means in this application so that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram schematically illustrating a structure of a vehicle as an electric device according to some embodiments of this disclosure.
FIG. 2 is a schematic diagram schematically illustrating a bottom structure of a vehicle as an electric device according to some embodiments of this disclosure.
FIG. 3 is a perspective exploded view illustrating a battery cell according to some embodiments of this disclosure.
FIG. 4 is a perspective exploded view schematically illustrating an end cover and a pole assembly of a battery cell according to some embodiments of this disclosure.
FIG. 5 is a perspective view schematically illustrating a pole body in a pole assembly before riveting according to some embodiments of this disclosure.
FIG. 6 is a perspective view schematically illustrating a pole body in a pole assembly after riveting according to some embodiments of this disclosure.
FIG. 7 is a top view schematically illustrating a pole body in a pole assembly after riveting according to some embodiments of this disclosure.
FIG. 8 is a schematic cross-sectional view taken along line A-A in FIG. 7.
FIG. 9 is a cross-sectional view corresponding to FIG. 8, schematically illustrating the pole body in the pole assembly before riveting according to some embodiments of this disclosure.
FIG. 10 is a cross-sectional view corresponding to FIG. 8, schematically illustrating the pole body in the pole assembly before riveting with an outer wall of a bending portion thinned according to some embodiments of this disclosure.
FIG. 11 is a cross-sectional view corresponding to FIG. 8, schematically illustrating the pole body in the pole assembly after riveting with the outer wall of the bending portion thinned according to some embodiments of this disclosure.
FIG. 12 is a cross-sectional view corresponding to FIG. 8, schematically illustrating the pole body in the pole assembly before riveting with both inner and outer walls of a bending portion thinned according to some embodiments of this disclosure.
FIG. 13 is a cross-sectional view corresponding to FIG. 8, schematically illustrating the pole body in the pole assembly after riveting with both inner and outer walls of a bending portion thinned according to some embodiments of this disclosure.
FIG. 14 is a cross-sectional view corresponding to FIG. 8, schematically illustrating the pole body in the pole assembly before riveting with a bending resistance weakening portion disposed between a bending portion and a bearing portion according to some embodiments of this disclosure.
FIG. 15 is a cross-sectional view corresponding to FIG. 8, schematically illustrating the pole body in the pole assembly after riveting with a bending resistance weakening portion disposed between a bending portion and a bearing portion according to some embodiments of this disclosure.
FIG. 16 is a perspective view schematically illustrating a pole body in a pole assembly with reinforcing ribs disposed on a bearing portion according to some embodiments of this disclosure.
FIG. 17 is a schematic diagram schematically illustrating a structure of a pole body in a pole assembly shown in FIG. 16 after riveting.

In the drawings, the drawings are not drawn to actual scale.

Description of reference signs:
D: vehicle; B: battery; CH: chassis; CON: controller; M: motor;
200: battery cell; 210: first wall (end cover); 220: battery housing; 230: electrode assembly; 240: negative electrode end cover; 250: fixing member; 260: sealing nail;
100: pole assembly; 110: pole body; 120: first insulating member; 130: sealing member; 140: adapter; 150: second insulating member; 121: first portion; 122: second portion; 123: protruding portion; 124: accommodating groove; S1: connection surface; S2: abutting surface;
111: bearing portion; 111a: flange portion; 111b: reinforcing rib; 112: bending portion; 112a: thinning groove; 113: bending groove; and 114: holding portion.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include/comprise" and "have" and any other variations thereof in the specification, claims, and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, specific sequence, or primary-secondary relationship of the technical features indicated. In addition, the term "perpendicular" is not perpendicular in the strict sense but within an allowable range of error. "Parallel" is not parallel in the strict sense but within an allowable range of error.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of this application, the term "a plurality of" means at least two unless otherwise specifically stated. Similarly, "a plurality of groups" means more than two groups, and "a plurality of pieces" means more than two pieces, unless there are explicit and specific limitations otherwise.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mounting", "connection", "joining", "fastening", and "abutment" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

For a battery cell included in a battery, the inventors have noticed that in a structure where a pole assembly is used to achieve electrical connection between the interior and exterior of the battery cell, when the pole assembly is disposed on the battery housing of the battery cell, for example, through riveting or other ways, poor riveting, such as cracking of a first insulating member or dimensional deformation of a bearing portion provided with an electrolyte injection hole, may sometimes occur during the riveting process. Poor riveting of the pole assembly directly affects the safety and reliability of the battery cell and a battery containing such battery cell. Therefore, whether the pole assembly can be smoothly riveted to the battery cell has become an issue.

To enable the smooth riveting of the pole assembly to the battery cell and minimize problems caused by poor riveting, after research, the inventors of this application have found that the main reason for this issue is that during the riveting process, during riveting of the bending portion of the pole body to dispose the pole assembly on the battery cell, the bending portion is not easily bent. In such cases, the riveting pressure is usually increased to forcibly bend the bending portion, but excessive riveting pressure may cause deformation of the bearing portion of the pole body and sometimes lead to damage and failure of components such as the first insulating member and sealing member disposed around the pole body. In response to this, the inventors, after in-depth research, considered reducing the bending resistance strength of the bending portion of the pole body and/or increasing the bending resistance strength of the bearing portion of the pole body, so that the pole body can smoothly bend the bending portion and connect the bending portion to the battery cell during the riveting process, thereby achieving the fixation of the pole assembly relative to the battery cell.

Based on the preceding considerations, to smoothly dispose the pole assembly through riveting or other ways and increase the yield rate when the pole assembly is disposed, the inventors have designed a battery cell having a battery housing, where a pole assembly is disposed on a first wall of the battery housing, the pole assembly includes a pole body, and the pole body includes: a bearing portion, the bearing portion being inserted through a mounting hole of the first wall; and a bending portion, the bending portion being connected to one end of the bearing portion in a central axis direction of the bearing portion, bent relative to the bearing portion, and disposed on one side of the first wall, and a bending resistance strength of the bending portion being less than a bending resistance strength of the bearing portion.

In the new battery cell proposed by the inventors, since the bending resistance strength of the bending portion in the pole body is less than the bending resistance strength of the bearing portion, during riveting of the pole body, the bending portion is more easily bent by riveting compared to the bearing portion. In this case, without applying excessive riveting pressure, the bending portion can be bent and brought into contact with the first wall of the battery cell, which can help to smoothly position the pole assembly on the first wall of the battery cell through riveting or other ways, and can also help to reduce the occurrence of damage to components around the pole body due to excessive riveting pressure, thereby increasing the yield rate during the positioning of the pole assembly.

In addition, an embodiment of this disclosure further provides a battery having such battery cell and an electric device having such battery.

An embodiment of this disclosure provides an electric device using a battery as a power source, where the battery is configured to provide electrical energy to the electric device. The electric device may be, but is not limited to, a mobile phone, a portable device, a notebook computer, an electric bicycle, an electric vehicle, a ship, a spacecraft, an electric toy, and an electric tool. For example, the spacecraft includes an airplane, a rocket, a space shuttle, and a spaceship; the electric toy includes a fixed or mobile electric toy, for example, a game console, an electric toy car, an electric toy ship, and an electric toy airplane; the electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

The battery mentioned in the embodiments of this disclosure may include a single physical module that includes one or more battery cells for providing a higher voltage and capacity. When the battery cell is provided in plurality, the plurality of battery cells are connected in series, parallel, or series-parallel through bus-bar.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

For ease of description, the electric device of some embodiments of this disclosure being a vehicle D is used as an example for description.

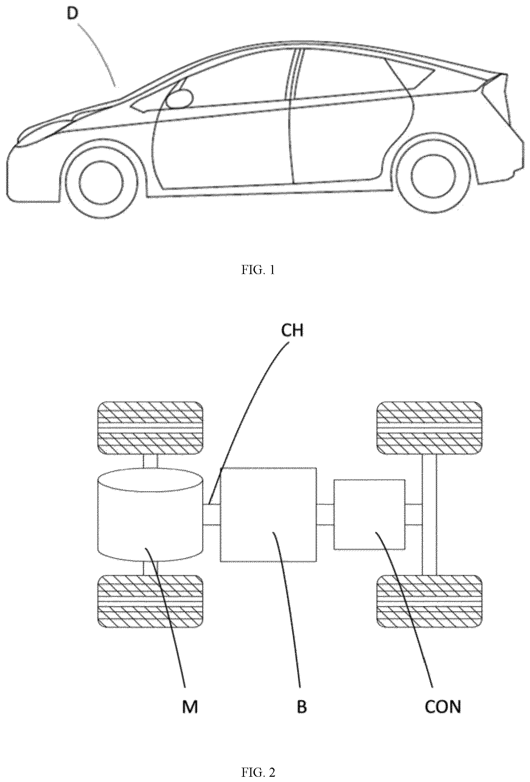

Referring to FIG. 1 and FIG. 2, FIG. 1 is a schematic diagram illustrating a structure of a vehicle D according to some embodiments of this disclosure. The vehicle D may be a fossil fuel vehicle, a natural-gas vehicle, or a new energy vehicle, where the new energy vehicle may be a battery electric vehicle, a hybrid electric vehicle, a range-extended vehicle, or the like. The vehicle D is provided with a battery B inside, where the battery B may be arranged at the bottom, front or rear of the vehicle D. The battery B may be configured to supply power to the vehicle D. For example, the battery B may be used as an operational power supply for the vehicle D.

FIG. 2 shows a bottom structure of the vehicle shown in FIG. 1. The battery B may be installed on the chassis CH of the vehicle D. The vehicle D may also include a controller CON and a motor M. The battery B is configured to supply electrical energy for the operation of the motor M and other components in the vehicle D. The controller CON is configured to control the operation of the motor M. For example, it is configured to meet the power demand for the starting, navigation, and driving operations of the vehicle D.

In some embodiments of this disclosure, the battery B may be used as not only the operational power supply for the vehicle D but also a driving power source for the vehicle D, replacing all or part of the fossil fuel or the natural gas to provide driving power for the vehicle D.

The battery B provided in some embodiments of this disclosure includes, for example, a box and a battery cell accommodated in the box. The box includes a box shell and a box cover fastened to the box shell. The box is configured to provide an accommodating space for the battery cell. The box may be a cuboid as a whole, or may have other shapes, such as a cylinder. The box cover may be mutually covered with the box shell to define an accommodating space for accommodating the battery cell. In addition, the joint between the box shell and the box cover may be sealed by a sealing member, and the sealing member may be a sealing ring, sealant, or the like.

In the battery B, the battery cell may be provided in plurality, the plurality of battery cells may be connected in series, parallel, or series-parallel. Being connected in series-parallel means a combination of series and parallel connections of the plurality of battery cells. The plurality of the battery cells 20 may be directly connected in series, parallel, or series-parallel, and the entirety formed by the plurality of battery cells is then accommodated in the box.

In some embodiments, the battery B may be connected in series, parallel, or series-parallel first to form a battery group. The battery group may be in a form of battery module. A plurality of battery groups are then connected in series, parallel, or series-parallel to form an entirety which is accommodated in the box.

The battery cell may include a lithium-ion secondary battery, a lithium-ion primary battery, a lithium-sulfur battery, a sodium-lithium-ion battery, a sodium-ion battery, a magnesium-ion battery, or the like. This is not limited in this embodiment of this disclosure. The battery cell may be cylindrical, flat, rectangular, or another shape, and this is also not limited in the embodiments of this disclosure. The battery cell is typically divided into three types by packaging method: a cylinder cell, a prismatic cell, and a pouch battery cell, and this is also not limited in the embodiments of this disclosure.

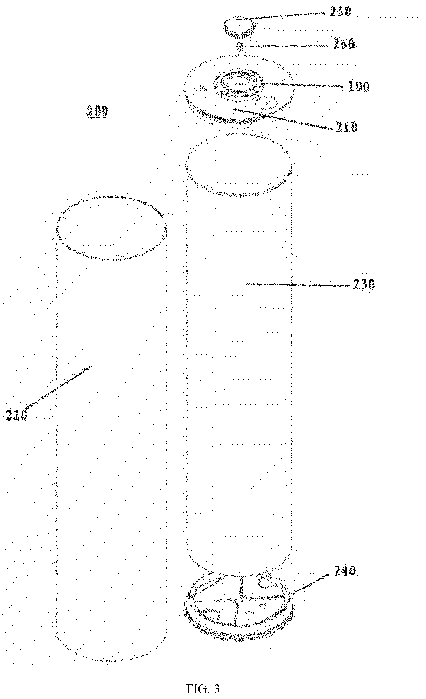

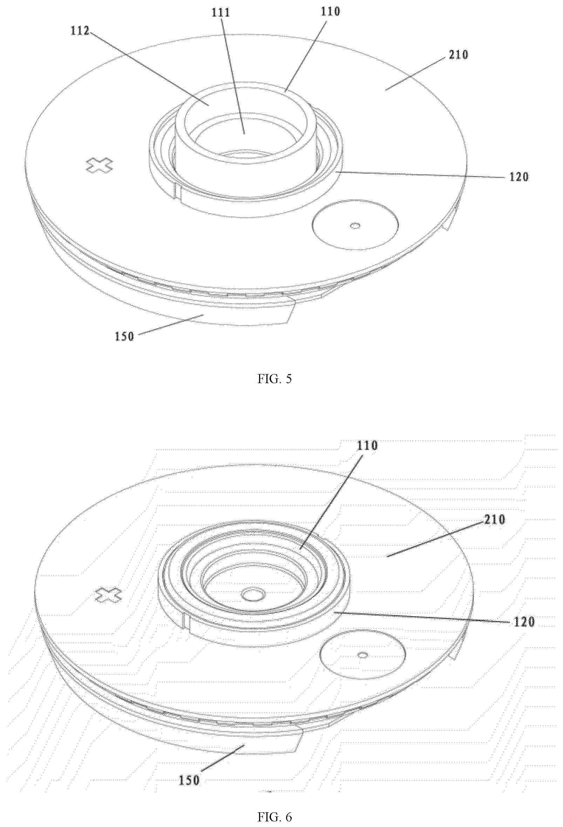

Referring to FIGs. 3 to 17, an embodiment of this application provides a battery cell 200 having a battery housing 220, where a pole assembly 100 is disposed on a first wall 210 of the battery housing 220. The pole assembly 100 includes a pole body 110, and the pole body 110 includes a bearing portion 111 and a bending portion 112. The bearing portion 111 is inserted through a mounting hole 211 of the first wall 210. The bending portion 112, for example, is connected to one end of the bearing portion 111 in a central axis direction C, bent relative to the bearing portion 111, and disposed on one side of the first wall 210. A bending resistance strength of the bending portion 112 is less than a bending resistance strength of the bearing portion 111.

The battery cell 200 is a basic unit for mutual conversion between chemical energy and electrical energy. As described above, each battery cell 200 may be a secondary battery or a primary battery; or may be a lithium-sulfur battery, a sodium-ion battery, or a magnesium-ion battery, but is not limited thereto. The battery cell 200 may be in a shape of a cylinder, a flat body, a rectangular parallelepiped, or in other shapes. The battery cell 200, for example, includes a battery housing 220 and an electrode assembly 230. The electrode assembly 230 may be accommodated in the battery housing 220. The electrode assembly 230 may include a positive electrode plate, a negative electrode plate, and a separator, and may be a wound structure formed by winding the positive electrode plate, the separator, and the negative electrode plate, or may be a stacked structure formed by stacking the positive electrode plate, the separator, and the negative electrode plate. Additionally, one or more electrode assemblies 230 may be stacked in the battery housing 220.

Optionally, the battery cell 200 further includes an end cover. The end cover may close an opening of the battery housing 220 to become integral with the battery housing 220. Optionally, a pole assembly 100 is disposed on the first wall 210 of the battery housing 220. The first wall 210 may be any side wall of a shell of the battery housing 220 or may be an end cover disposed on the battery housing 220.

The pole assembly 100 is a component used to electrically connect the electrode assembly 230 inside the battery cell 200 and the exterior, for example, disposed on the first wall 210 of the battery housing 220 through riveting or other ways. The pole assembly 100 at least includes a pole body 110. Additionally, optionally, the pole assembly 100 may further include a first insulating member for insulating the pole body 110 from the first wall 210, a sealing member for preventing electrolyte leakage, a second insulating member for insulating the pole body 110 from the first wall 210, and the like.

The pole body 110 in the pole assembly 100, for example, at least includes a bearing portion 111 and a bending portion 112. The bearing portion 111 is a part inserted through the mounting hole 211 of the first wall 210 when the pole assembly 100 is disposed on the first wall 210. Optionally, the bearing portion 111, for example, is provided with an electrolyte injection hole for injecting an electrolyte. The bearing portion 111 does not undergo bending deformation during the riveting process or undergoes only minor bending deformation compared to the bending portion 112. This can help ensure that the dimensions of the electrolyte injection hole and the like disposed on the bearing portion 111 do not change excessively. In addition, for example, this can also effectively reduce the possibility of components such as the first insulating member and sealing member around the bearing portion 111 being damaged due to deformation of the bearing portion 111.

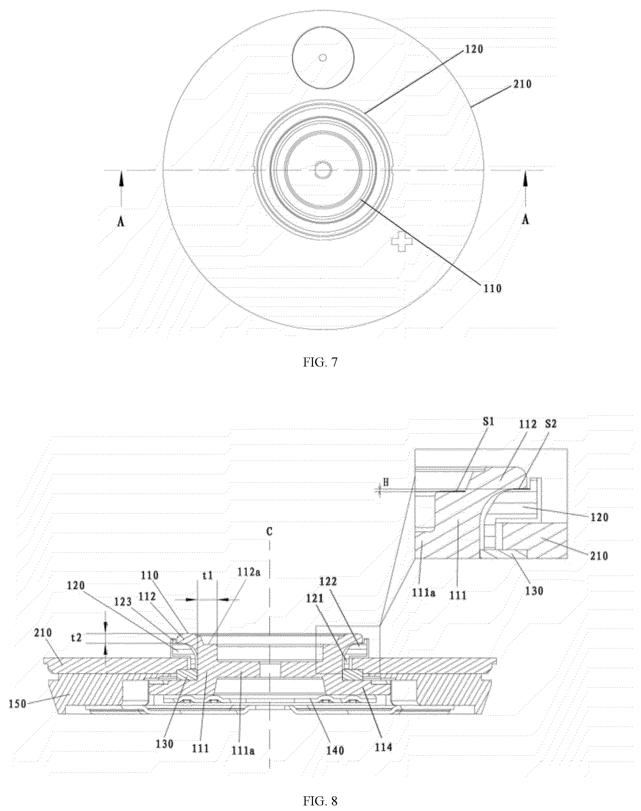

The bending portion 112 is a part that is bent by riveting when the pole assembly 100 is disposed on the first wall 210. As shown in FIGs. 8 to 15, optionally, the bending portion 112 is connected to one end of the bearing portion 111 in the central axis direction C, for example, it may be integrally formed with the bearing portion 111. By bending the bending portion 112 relative to the bearing portion 111 and disposing it on one side of the first wall 210, the pole assembly 100 is disposed on the first wall 210 as a whole. In the pole assembly 100 of this embodiment of this application, the bending resistance strength of the bending portion 112 is less than the bending resistance strength of the bearing portion 111, thereby making the bending portion 112 more prone to bending deformation compared to the bearing portion 111.

The central axis direction C of the bearing portion 111 is a direction that passes through a center position of a cross-section of the bearing portion 111 and is substantially parallel to an extension direction of the bearing portion 111. Additionally, in some embodiments, the central axis direction C is also substantially perpendicular to a connection surface between the bearing portion 111 and the bending portion 112. In this specification, unless otherwise specified, the central axis direction C of the bearing portion 111 is synonymous with an axial direction or length direction of the bearing portion 111, and a direction substantially perpendicular to the central axis direction C of the bearing portion 111 is synonymous with a cross-sectional direction of the bearing portion 111.

In the embodiments of this application, "bending resistance strength" refers to the degree of difficulty for a component (including a part of the component) to undergo bending deformation relative to its axial direction when the component is subjected to a force from a direction substantially perpendicular to the axial direction. For example, the greater the bending resistance strength of a component, the less likely the component is to undergo bending deformation relative to the axial direction when subjected to the same force from a direction substantially perpendicular to the axial direction. The bending resistance strength, for example, depends on the inherent properties of the material of the component and/or the shape characteristics of the component. In the pole assembly 100 of these embodiments of this application, as described above, since the bending resistance strength of the bending portion 112 is less than the bending resistance strength of the bearing portion 111, the bending portion 112 is more prone to bending deformation compared to the bearing portion 111 during riveting of the pole assembly 100.

Optionally, the bending portion 112, for example, is bent to an angle exceeding a predetermined angle with respect to the central axis direction C of the bearing portion 111 and is disposed on one side of the first wall 210, sometimes this process is also referred to as "flanging and bending the bending portion 112." Optionally, for example, the bending portion 112 may be bent to an extent that the bending portion 112 abuts against one side of the first wall 210 through riveting or other ways.

In the battery cell 200 of this embodiment, since the bending resistance strength of the bending portion 112 in the pole body 110 is less than the bending resistance strength of the bearing portion 111, during riveting of the pole body 110, the bending portion 112 is more easily bent by riveting compared to the bearing portion 111. In this case, without applying excessive riveting pressure, the bending portion 112 can be bent and brought into contact with the first wall 210 of the battery cell 200, which can help to smoothly position the pole assembly 100 on the first wall 210 of the battery cell 200 through riveting or other ways, and can also help to reduce the occurrence of damage to components around the pole body 110 due to excessive riveting pressure, thereby increasing the yield rate during the positioning of the pole assembly 100.

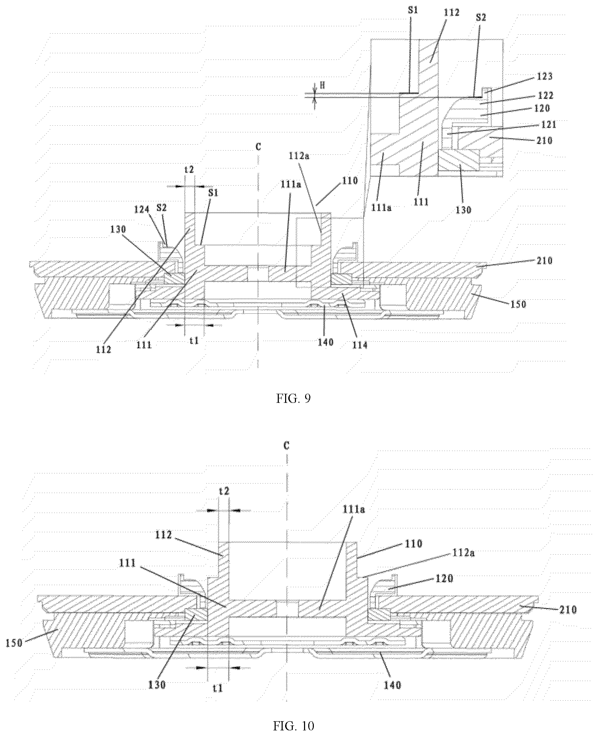

Referring to FIGs. 9 to 12, according to some embodiments of this application, optionally, a minimum thickness t1 of the bearing portion 111 is greater than a maximum thickness t2 of the bending portion 112.

The minimum thickness t1 of the bearing portion 111 is a thickness of a thinnest part in a cross-section of the bearing portion 111 in the central axis direction C. The maximum thickness t2 of the bending portion 112 is a thickness of a thickest part in a cross-section of the bending portion 112 substantially perpendicular to its extension direction.

By making the minimum thickness t1 of the bearing portion 111 in a direction substantially perpendicular to the central axis direction C greater than the maximum thickness t2 of the bending portion 112, the bending resistance strength of the bending portion 112 can be made less than the bending resistance strength of the bearing portion 111. Consequently, during riveting of the pole body 110, without applying excessive riveting pressure, the bending portion 112 can be bent and brought into contact with the first wall 210 of the battery housing 220, which can help to reduce issues of poor riveting due to excessive riveting pressure.

According to some embodiments of this application, optionally, a ratio of the maximum thickness t2 of the bending portion 112 to the minimum thickness t1 of the bearing portion 111 is within a range of 0 to 0.85.

By making the ratio of the maximum thickness t2 of the bending portion 112 to the minimum thickness t1 of the bearing portion 111 within a range of 0 to 0.85, the bending resistance strength of the bending portion 112 can be effectively ensured to be less than the bending resistance strength of the bearing portion 111, thereby making the bending portion 112 more prone to bending deformation relative to the bearing portion 111 during the riveting process.

According to some embodiments of this application, optionally, the ratio of the maximum thickness t2 of the bending portion 112 to the minimum thickness t1 of the bearing portion 111 is within a range of 0.3 to 0.7.

By making the ratio of the maximum thickness t2 of the bending portion 112 to the minimum thickness t1 of the bearing portion 111 within a range of 0.3 to 0.7, the bending resistance strength of the bending portion 112 can be further effectively ensured to be less than the bending resistance strength of the bearing portion 111, thereby more reliably ensuring that the bending portion 112 is more prone to bending deformation relative to the bearing portion 111 during the riveting process.

Referring to FIGs. 8 and 9, according to some embodiments of this application, optionally, a thinning groove 112a is disposed on at least one side of the bending portion 112 in a direction substantially perpendicular to the central axis direction C.

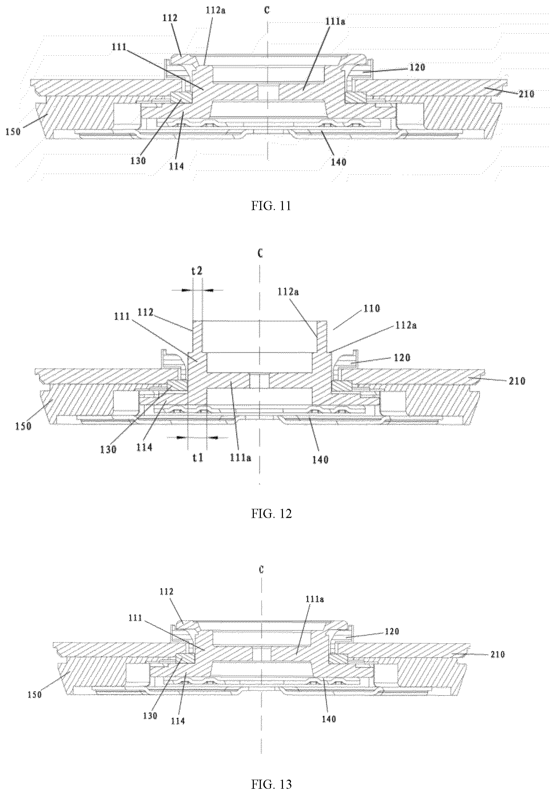

The thinning groove 112a, for example, is obtained by removing a part of at least one of an inner side and an outer side of the bending portion 112, so as to make the maximum thickness t2 of the bending portion 112 less than the minimum thickness t1 of the bearing portion 111. For example, when observed in a direction substantially perpendicular to the central axis direction C, as shown in FIG. 9, an outer peripheral dimension of the bearing portion 111 may be the same as an outer peripheral dimension of the bending portion 112 before bending, and an inner peripheral dimension of the bearing portion 111 may be less than an inner peripheral dimension of the bending portion 112 before bending; or as shown in FIG. 10, an inner peripheral dimension of the bearing portion 111 may be the same as an inner peripheral dimension of the bending portion 112 before bending, and an outer peripheral dimension of the bearing portion 111 may be greater than an outer peripheral dimension of the bending portion 112 before bending; or as shown in FIG. 12, an outer peripheral dimension of the bearing portion 111 may be greater than an outer peripheral dimension of the bending portion 112 before bending, and an inner peripheral dimension of the bearing portion 111 may be less than an inner peripheral dimension of the bending portion 112 before bending.

In the above description, the outer peripheral dimension, for example, refers to a circumference of an outer peripheral surface in a direction substantially perpendicular to the central axis direction C, and correspondingly, the inner peripheral dimension, for example, refers to a circumference of an inner peripheral surface in a direction substantially perpendicular to the central axis direction C. In some embodiments, the outer peripheral dimension may correspond to an outer diameter dimension, and the inner peripheral dimension may correspond to an inner diameter dimension.

By disposing a thinning groove 112a on at least one side of the bending portion 112 in a direction substantially perpendicular to the central axis direction C, the bending resistance strength of the bending portion 112 can be made less than the bending resistance strength of the bearing portion 111, and the bending portion 112 is made more prone to bending deformation relative to the bearing portion 111. Moreover, when a thinning groove 112a is disposed on an outer side of the bending portion 112 in the direction substantially perpendicular to the central axis direction C, a convex step surface is formed between an outer peripheral surface of the bearing portion 111 and an outer peripheral surface of the bending portion 112, meaning that a convex step surface is formed on an outer peripheral surface of the pole body 110, which can provide positioning support for the bending portion 112 during riveting of the bending portion 112. Furthermore, when a thinning groove 112a is disposed on an inner side of the bending portion 112 in the direction substantially perpendicular to the central axis direction C, a convex step surface is formed between an inner peripheral surface of the bearing portion 111 and an inner peripheral surface of the bending portion 112. In this way, for example, during riveting, the convex step surface between the bearing portion 111 and the bending portion 112 can provide support for a rivet, which can reduce the possibility of the rivet advancing further and causing deformation of the bearing portion 111.

Referring to FIGs. 8 to 15, according to some embodiments of this application, optionally, a bending resistance reinforcement portion is disposed on the bearing portion 111.

The bending resistance reinforcement portion disposed on the bearing portion 111 refers to a part that can further ensure that the bending resistance strength of the bearing portion 111 is greater than the bending resistance strength of the bending portion 112. In some embodiments, the bending resistance reinforcement portion may be integrally or separately disposed on the bearing portion 111, so that the bearing portion 111, when subjected to a force from a direction substantially perpendicular to the central axis direction C, can resist the force without undergoing bending deformation compared to the bending portion 112. The bending resistance reinforcement portion is not particularly limited provided that it can enhance the bending resistance strength of the bearing portion 111. Additionally, the bending resistance reinforcement portion may be disposed on either an outer side or an inner side of the bearing portion 111, and is not particularly limited.

By disposing a bending resistance reinforcement portion on the bearing portion 111, the bending resistance strength of the bearing portion 111 can be enhanced. Thus, even if a large force is applied to the pole body 110 to reliably bend the bending portion 112, the bending resistance reinforcement portion supports the bearing portion 111, preventing significant deformation of the bearing portion 111 that could damage surrounding components, thereby increasing the yield rate during the positioning of the pole assembly 100.

Referring to FIGs. 8 to 15, according to some embodiments of this application, optionally, the bending resistance reinforcement portion includes a flange portion 111a extending from an inner surface of the bearing portion 111 toward a center of the bearing portion 111.

The flange portion 111a refers to a protruding part extending from the inner surface of the bearing portion 111 toward the center of the bearing portion 111. Optionally, the flange portion 111a may be configured to have the same dimension as the bearing portion 111 in the central axis direction C, or may be configured to have a dimension smaller than that of the bearing portion 111 in the central axis direction C, or may be configured to be formed in plurality, where the plurality of flange portions are spaced apart in the central axis direction C. The flange portion 111a is not particularly limited in its specific configuration provided that it can enhance the bending resistance strength of the bearing portion 111. In some embodiments, optionally, an electrolyte injection hole is enclosed by the flange portion 111a.

Since the bending resistance reinforcement portion disposed on the bearing portion 111 includes a flange portion 111a extending from the inner surface of the bearing portion 111 toward the center of the bearing portion 111, the flange portion 111a can help to reduce bending deformation of the bearing portion 111 when the bearing portion 111 is subjected to a force from a direction substantially perpendicular to the central axis direction C, thereby helping to ensure that the bearing portion 111 does not undergo significant deformation during riveting.

According to some embodiments of this application, optionally, the flange portion 111a is disposed on the inner surface of the bearing portion 111 in a manner of surrounding an entire circumference.

Since the flange portion 111a is disposed on the inner surface of the bearing portion 111 in a manner of surrounding an entire circumference, the bearing portion 111 can be uniformly reinforced in a circumferential direction of the bearing portion 111, which can help to reduce the possibility of inhomogeneous deformation of the bearing portion 111.

Referring to FIGs. 8 to 15, according to some embodiments of this application, optionally, in the central axis direction C, the flange portion 111a is at a certain distance from an end of the bearing portion 111 away from the bending portion 112.

The end of the bearing portion 111 away from the bending portion 112 is an end of the bearing portion 111 on a side opposite the bending portion 112. When the flange portion 111a is at a certain distance from the above-mentioned end of the bearing portion 111, the flange portion 111a is closer to a part of the pole body 110 that is riveted by a rivet or other components.

Since, in the central axis direction C, the flange portion 111a is at a certain distance from the end of the bearing portion 111 away from the bending portion 112, during riveting of the bending portion 112, if a force in a direction substantially perpendicular to the central axis direction C of the bearing portion 111 acts on the bearing portion 111 to cause the bearing portion 111 to expand and bend, the flange portion 111a can effectively pull the bearing portion 111 to prevent its expansion, which can effectively enhance the bending resistance strength of the bearing portion 111.

Referring to FIGs. 8 to 15, according to some embodiments of this application, optionally, at least a part of the flange portion 111a is located within the mounting hole 211.

At least a part of the flange portion 111a being located within the mounting hole 211 means that, when the pole assembly 100 is disposed on the first wall 210, the bearing portion 111 of the pole body 110 is inserted through the mounting hole 211 of the first wall 210, and in this state, in a direction substantially perpendicular to the central axis direction C, the flange portion 111a disposed on the bearing portion 111 at least partially overlaps with the first wall 210.

Since at least a part of the flange portion 111a is located within the mounting hole 211, meaning that the flange portion 111a and the first wall 210 at least partially overlap in a direction substantially perpendicular to the central axis direction C of the bearing portion 111, when a large riveting pressure is applied to cause the bearing portion 111 to expand and bend, the flange portion 111a and the first wall 210 of the battery housing 220 can synergistically resist the outward expansion of the bearing portion 111, which can effectively enhance the bending resistance strength of the bearing portion 111.

According to some embodiments of this application, optionally, the pole body 110 further includes a holding portion 114 connected to the bearing portion 111, the holding portion 114 and the bending portion 112 are respectively disposed on two sides of the first wall 210, and the flange portion 111a is spaced apart from the holding portion 114.

In some embodiments, the pole body 110 further includes a holding portion 114, and the holding portion 114 is connected to an end of the bearing portion 111 on a side opposite the bending portion 112. Optionally, the holding portion 114 may extend in a direction substantially perpendicular to the central axis direction C. The holding portion 114 and the bending portion 112 are configured to secure the first wall 210 therebetween, allowing the pole body 110 to be disposed on the first wall 210 as a whole. Optionally, the flange portion 111a is spaced apart from the holding portion 114 by a certain distance.

By adopting such a structure, the pole body 110 can be stably disposed on the first wall 210 of the battery housing 220 using the holding portion 114 and the bending portion 112. Additionally, since the flange portion 111a is spaced apart from the holding portion 114, during riveting of the bending portion 112, the flange portion 111a can effectively resist the force generated by riveting that causes the bearing portion 111 and the holding portion 114 to expand and bend, which can effectively enhance the bending resistance strength of the bearing portion 111 and the holding portion 114.

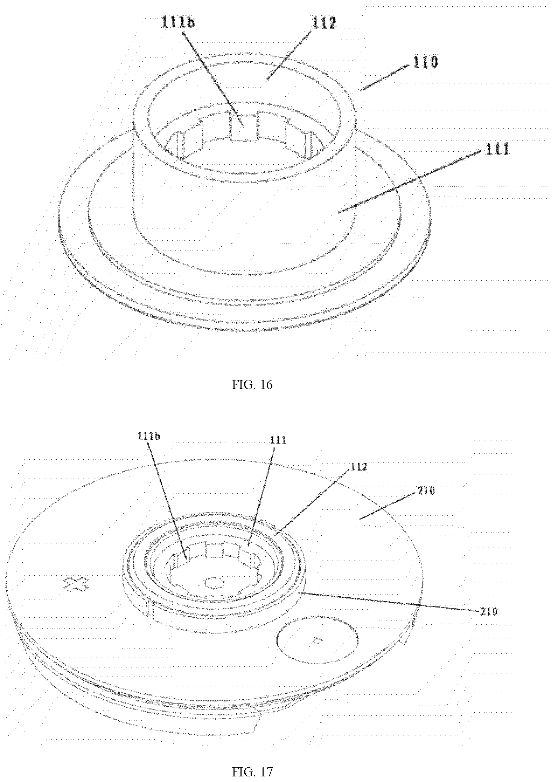

Referring to FIGs. 16 and 17, according to some embodiments of this application, optionally, the bending resistance reinforcement portion includes reinforcing ribs 111b disposed on an inner side of the bearing portion 111, the reinforcing ribs 111b extend in the central axis direction C, and a plurality of the reinforcing ribs 111b are disposed at intervals along a circumferential direction of the bearing portion 111.

The reinforcing ribs 111b disposed on the inner side of the bearing portion 111 and extending in the central axis direction C may either extend directly from the bearing portion 111 or may be disposed on a flange portion formed on an inner surface of the bearing portion 111. Optionally, a plurality of the reinforcing ribs 111b are disposed at intervals along the circumferential direction of the bearing portion 111.

By disposing reinforcing ribs 111b on the inner side of the bearing portion 111, making the reinforcing ribs 111b extend in the central axis direction C, and disposing a plurality of the reinforcing ribs 111b at intervals along the circumferential direction of the bearing portion 111, the reinforcing ribs 111b can be used to effectively resist a force causing the bearing portion 111 to expand in a direction substantially perpendicular to the central axis direction C.

According to some embodiments of this application, optionally, the reinforcing ribs 111b extend to a connection portion between the bearing portion 111 and the bending portion 112.

The reinforcing ribs 111b extending to the connection portion between the bearing portion 111 and the bending portion 112 means that the reinforcing ribs 111b extend in the central axis direction C, and an end surface of the reinforcing ribs 111b is substantially flush with a plane where the connection portion between the bearing portion 111 and the bending portion 112 is located.

Since the reinforcing ribs 111b extend to the connection portion between the bearing portion 111 and the bending portion 112, meaning that one end of the reinforcing ribs 111b corresponds to an end of the bearing portion 111 connected to the bending portion 112, the reinforcing ribs 111b can be used to effectively resist a force causing the bearing portion 111 to expand in a direction substantially perpendicular to the central axis direction C, while, for example, during riveting using a rivet, an end surface of the reinforcing ribs 111b can also provide support for the rivet, which can reduce the possibility of the rivet advancing further and causing deformation of the bearing portion 111.

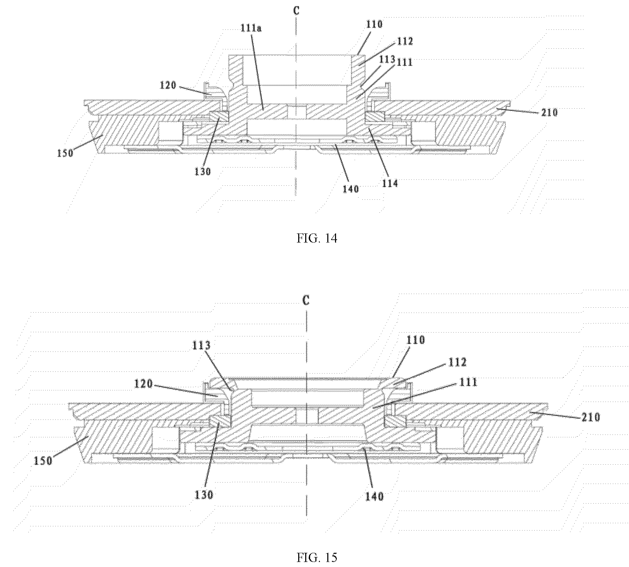

Referring to FIGs. 14 and 15, according to some embodiments of this application, optionally, a bending resistance weakening portion is disposed at a connection portion between the bending portion 112 and the bearing portion 111, and the bending portion 112 is bent from the bending resistance weakening portion.

The bending resistance weakening portion disposed at the connection portion between the bending portion 112 and the bearing portion 111 refers to a part that can further ensure that the bending portion 112 is easily bent during operations such as riveting. In some embodiments, the bending resistance weakening portion can be achieved by designing a shape and/or material of the connection portion between the bending portion 112 and the bearing portion 111. For example, a notch, namely a bending groove, may be formed at the connection portion between the bending portion 112 and the bearing portion 111 to form the bending resistance weakening portion, or a connecting member made of a material with at least lower bending resistance strength than the bearing portion 111 may be used, with the bending portion 112 and the bearing portion 111 connected to two sides of the connecting member, respectively. The bending resistance weakening portion is not particularly limited provided that it can facilitate bending of the bending portion 112.

By disposing a bending resistance weakening portion at the connection portion between the bending portion 112 and the bearing portion 111 and making the bending portion 112 bend from the bending resistance weakening portion, the possibility of significant deformation of the bearing portion 111 due to riveting pressure can be effectively reduced.

According to some embodiments of this application, optionally, the bending resistance weakening portion is a bending groove 113 or a connecting member made of a material with lower bending resistance strength.

The bending groove 113 refers to a notch formed at the connection portion between the bending portion 112 and the bearing portion 111, which may be a V-shaped notch formed by flat surfaces or a notch with a curved surface. The connecting member made of a material with lower bending resistance strength may be a component with a bending resistance strength lower than those of both the bending portion 112 and the bearing portion 111, or a component with a bending resistance strength lower than that of only the bearing portion 111. Since the hardness of a material is somewhat correlated with the bending resistance strength of a component made from that material, in some embodiments, a material with a hardness at least lower than the hardness of the material constituting the bearing portion 111 may be used to form the connecting member.

By disposing a bending groove 113 at the connection portion between the bending portion 112 and the bearing portion 111, the bending portion 112 is easily bent outward when subjected to riveting pressure, and the bending groove can also accommodate deformation of the bending portion 112 during riveting, which can improve the riveting strength and riveting efficiency of the bending portion 112, and can also increase the riveting yield rate. Additionally, by disposing a connecting member made of a material with lower bending resistance strength at the connection portion between the bending portion 112 and the bearing portion 111, it can be effectively ensured that the bending portion 112 is more prone to bending deformation than the bearing portion 111 when subjected to riveting pressure.

Referring to FIGs. 8 to 15, according to some embodiments of this application, optionally, the pole assembly 100 further includes a first insulating member 120 surrounding an outer side of the pole body 110, and the first insulating member 120 includes a first portion 121 and a second portion 122, where the first portion 121 is inserted into the mounting hole 211 of the first wall 210, the second portion 122 is connected to the first portion 121, and the second portion 122 is sandwiched between the bending portion 112 and the first wall 210.

The first insulating member 120 is a component used to insulate the pole body 110 from the first wall 210, and its material may be a plastic material such as polyethylene, polypropylene, or polyvinyl chloride, or may be any one of silicone rubber, nitrile rubber, hydrogenated nitrile rubber, fluororubber, fluorosilicone rubber, ethylene propylene diene monomer rubber, neoprene rubber, butyl rubber, acrylate rubber, natural rubber, or polyurethane rubber.

The first insulating member 120 includes a first portion 121 and a second portion 122 connected to the first portion 121. The first portion 121 is a part inserted between the bearing portion 111 and the first wall 210. The second portion 122 is a part that bears the bent bending portion 112 and is sandwiched between the bending portion 112 and the first wall 210. Optionally, the bent bending portion 112 abuts against an abutting surface S2 of the second portion 122 under the action of riveting pressure, and is connected to one side of the first wall 210 via the second portion 122.

By making the first insulating member 120 surround the outer side of the pole body 110, inserting the first portion 121 of the first insulating member 120 into the mounting hole 211 of the first wall 210, and sandwiching the second portion 122 between the bending portion 112 and the first wall 210, the first insulating member 120 can reliably insulate the pole body 110 from the first wall 210 of the battery housing 220, which can improve the safety and reliability of the battery cell 200. Additionally, since the second portion 122 of the first insulating member 120 can also provide support when pressing the bent bending portion 112, the bending portion 112 can be reliably disposed on the first wall 210 of the battery housing 220.

According to some embodiments of this application, optionally, an inner peripheral dimension of the second portion 122 is greater than an inner peripheral dimension of the first portion 121.

When the inner peripheral dimension of the second portion 122 is greater than the inner peripheral dimension of the first portion 121, and when the first insulating member 120 surrounds the pole body 110, a certain space is left between the second portion 122 and the pole body 110.

By making the inner peripheral dimension of the second portion 122 greater than the inner peripheral dimension of the first portion 121, when the first insulating member 120 surrounds the outer side of the pole body 110, the second portion 122 is farther from the pole body 110. Thus, during riveting, deformation of the bearing portion 111 and the bending portion 112 caused by riveting can be accommodated, which helps to reduce the possibility of the first insulating member 120 being cracked due to excessive stress concentration, thereby effectively improving the riveting efficiency of the pole assembly 100.

As shown in FIGs. 8 and 9, according to some embodiments of this application, optionally, the bending portion 112 and the bearing portion 111 are connected at a connection surface S1, the bending portion 112 abuts against an abutting surface S2 of the second portion 122, and in the central axis direction C, a distance H between the connection surface S1 and the abutting surface S2 is within a range of -5 mm to +5 mm.

In a state where the first insulating member 120 surrounds the pole body 110, when the connection surface between the bending portion 112 and the bearing portion 111 is set as S1 and the abutting surface of the second portion 122 abutting against the bending portion 112 is set as S2, the distance H between the connection surface S1 and the abutting surface S2 in the central axis direction C affects the quality of riveting.

For example, under the condition that a direction on a side of the bending portion 112 in the central axis direction C of the bearing portion 111 is set as positive "+" and a direction opposite that side of the bending portion 112 is set as negative "-", if the connection surface S1 is more than 5 mm in the positive direction relative to the abutting surface S2, meaning that the distance H between the connection surface S1 and the abutting surface S2 is +5 mm or more, since the bending portion 112 is bent starting approximately from the connection surface S1, the distance between the bending portion 112 and the second portion 122 of the first insulating member 120 is too large, which may lead to an inability to firmly dispose the bending portion 112 on the first wall 210, meaning that it may cause an issue of insufficient pressing.

In addition, if the connection surface S1 is more than 5 mm in the negative direction relative to the abutting surface S2, meaning that the distance H between the connection surface S1 and the abutting surface S2 is -5 mm or more, the bending portion 112 excessively presses the second portion 122 surrounding the outer periphery during bending, which may damage the first insulating member 120 and cause insulation failure, meaning that it may cause an issue of excessive pressing.

In FIGs. 8 and 9, to more clearly illustrate the connection surface S1 between the bending portion 112 and the bearing portion 111, the abutting surface S2 of the second portion 122, and the distance H between the connection surface S1 and the abutting surface S2, a portion shown in a box is partially enlarged, and the lines representing the connection surface S1 and the abutting surface S2 are bolded. Additionally, optionally, as shown in FIG. 9, before the bending portion 112 is bent, the distance H between the connection surface S1 between the bending portion 112 and the bearing portion 111 and the abutting surface S2 of the second portion 122 may also be within a range of -5 mm to +5 mm.

By making the distance H between the connection surface S1 of the bending portion 112 and the bearing portion 111 and the abutting surface S2 of the second portion 122 within a range of -5 mm to +5 mm, problems of insufficient pressing or excessive pressing due to an inappropriate distance H between the connection surface S1 and the abutting surface S2 can be alleviated, increasing the yield rate when the pole assembly 100 is disposed, and enhancing the safety and reliability of the battery cell 200.

According to some embodiments of this application, optionally, the bending portion 112 and the bearing portion 111 are connected at a connection surface S1, the bending portion 112 abuts against an abutting surface S2 of the second portion 122, and in the central axis direction C, a distance H between the connection surface S1 and the abutting surface S2 is within a range of -2 mm to +2 mm.

By making the distance H between the connection surface S1 of the bending portion 112 and the bearing portion 111 and the abutting surface S2 of the second portion 122 within a range of -2 mm to +2 mm, problems of insufficient pressing or excessive pressing due to an inappropriate distance H between the connection surface S1 and the abutting surface S2 can be further effectively alleviated, allowing the bending portion 112 to be appropriately bent and disposed on the first wall 210 of the battery housing 220, and further increasing the yield rate when the pole assembly 100 is disposed.

As shown in FIGs. 8 and 9, according to some embodiments of this application, optionally, the second portion 122 is formed with a protruding portion 123, and the protruding portion 123 surrounds the bending portion 112.

The protruding portion 123 of the second portion 122 may surround the bending portion 112, so as to accommodate the bent bending portion 112 in a space defined by the protruding portion 123, namely an accommodating groove 124.

By making the protruding portion 123 formed on the second portion 122 surround the bending portion 112, the bent bending portion 112 can be accommodated in the accommodating groove defined by the protruding portion 123, which can reduce the probability of contact between the bent bending portion 112 and the first wall 210 of the battery housing 220. The first insulating member 120 can be used to reliably insulate the bearing portion 111 and the bending portion 112 from the first wall 210 of the battery housing 220, ensuring safety during use.

According to some embodiments of this application, optionally, the pole body 110 is provided with a holding portion 114 at another end of the bearing portion 111 in the central axis direction C, and the holding portion 114 and the bending portion 112 secure the first wall 210 from two sides.

In some embodiments, the holding portion 114 of the pole body 110 is disposed at an end of the bearing portion 111 on a side opposite the bending portion 112. Optionally, the holding portion 114 may extend in a direction substantially perpendicular to the central axis direction C and secure the first wall 210 from two sides with the bending portion 112, thereby installing the pole body 110 as a whole on the first wall 210.

By providing such a holding portion 114, the pole body 110 can be stably disposed on the first wall 210 of the battery housing 220 using the holding portion 114 and the bending portion 112 without detachment. This also helps to reduce the possibility of poor contact between the pole body 110 and the electrode assembly 230 of the battery cell 200, which could render the battery cell unusable.

According to some embodiments of this application, optionally, the pole assembly 100 further includes a sealing member 130, where the sealing member 130 is disposed between the holding portion 114 and the first wall 210, sealing the bearing portion 111 and the first wall 210.

The sealing member 130, disposed between the holding portion 114 and the first wall 210, is a component used to seal a gap between the bearing portion 111 and the first wall 210. The sealing member 130 may be made of a plastic material such as polyethylene, polypropylene, or polyvinyl chloride, or may be made of any one of silicone rubber, nitrile rubber, hydrogenated nitrile rubber, fluororubber, fluorosilicone rubber, ethylene propylene diene monomer rubber, neoprene rubber, butyl rubber, acrylate rubber, natural rubber, or polyurethane rubber.

By disposing a sealing member 130 between the holding portion 114 and the first wall 210 of the battery housing 220 to seal the bearing portion 111 and the first wall 210, the gap between the bearing portion 111 and the first wall 210 of the battery housing 220 can be sealed, which reduces the possibility of electrolyte leakage from the battery cell 200 through the gap between the bearing portion 111 and the first wall 210 of the battery housing 220, and can further improve the safety and reliability of the battery cell 200.

According to some embodiments of this application, optionally, the holding portion 114 is located inside the battery housing 220 of the battery cell 200.

Optionally, when the holding portion 114 and the bending portion 112 secure the first wall 210 from two sides, the holding portion 114 is located on an inner side of the battery housing 220, and the bending portion 112 is correspondingly located on an outer side of the battery housing 220.

Since the holding portion 114 is located inside the battery housing 220 of the battery cell 200, the bending portion 112 disposed on an outer side of the first wall 210 can be conveniently riveted from the exterior of the battery cell 200. Compared to a structure where the holding portion 114 is disposed outside the battery housing 220 and the bending portion 112 is disposed inside the battery housing 220, this can increase the working space during riveting.

According to some embodiments of this application, optionally, the pole assembly 100 further includes a second insulating member 150, where the second insulating member 150 is disposed between the holding portion 114 and the first wall 210.

The second insulating member 150, disposed between the holding portion 114 and the first wall 210, can insulate the holding portion 114 from the first wall 210. Additionally, optionally, the second insulating member 150 may have a portion extending in a direction substantially perpendicular to the central axis direction C, thereby allowing the holding portion 114 and the first wall 210 to stably secure the second insulating member 150 therebetween.

By disposing the second insulating member 150, the holding portion 114 and the first wall 210 of the battery housing 220 can be reliably insulated.

According to some embodiments of this application, optionally, the battery cell 200 further includes an adapter 140, the pole body 110 is fixed to the adapter 140, and the adapter 140 electrically connects the pole body 110 and the electrode assembly 230 of the battery cell 200.

The adapter 140 is a component electrically connected to the electrode assembly 230 of the battery cell 200, for example, made of a conductive material such as metal or alloy. In some embodiments, the adapter 140 may also function as a component for fixing the pole body 110.

By fixing the pole body 110 to the adapter 140 and using the adapter 140 to electrically connect the pole body 110 and the electrode assembly 230 of the battery cell 200, the pole body 110 can be electrically connected to the electrode assembly 230 while the adapter 140 provides support for the pole body 110, enabling the pole body 110 to be stably disposed on the battery cell 200.

According to some embodiments of this application, optionally, the battery housing 220 includes a shell and an end cover, and the first wall 210 is the shell and/or the end cover.

The battery housing 220, for example, includes a shell and an end cover. The shell is configured to accommodate the electrode assembly 230, and the end cover, for example, is configured to close an opening of the shell. The pole assembly 100 may be disposed on any side wall of the shell of the battery housing 220, or the pole assembly 100 may be disposed on the end cover, or the pole assembly 100 may be disposed on both the shell and the end cover as needed.

By adopting such a structure, since the first wall 210 provided with the pole body 110 can be the shell and/or the end cover of the battery housing 220, the degree of freedom in design is increased, allowing the position for installing the pole body 110 to be appropriately selected as needed.

The embodiments of this application further provide a battery, where the battery includes the battery cell 200 in the above embodiments.

By having the features of the embodiments of this application, the provided battery can obtain the benefits described for the battery cell 200.

An embodiment of this application further provides an electric device including the battery in the above embodiments, where the battery is configured to supply power to the electric device.

By having the features of the embodiments of this application, the provided electric device can obtain the benefits described for the battery cell 200 and the battery.

Referring to FIGs. 2 to 17, an embodiment of this application exemplifies the structure thereof.

As shown in FIGs. 2 and 3, the battery cell 200 included in the battery B includes a positive end cover as a first wall 210, a battery housing 220, an electrode assembly 230, and a negative electrode end cover 240.

The battery housing 220 is capable of having various shapes and sizes, for example, a rectangular parallelepiped, a cylinder, or a hexagonal prism. Specifically, the shape of the battery housing is determined based on the specific shape and size of the electrode assembly 230. The battery housing 220 is made of materials including copper, iron, aluminum, stainless steel, aluminum alloy, or plastic, and the like. A condition where the battery housing 220 is a cylinder is exemplified, but the shape is not limited thereto. The electrode assembly 230 is a component in the battery cell 200 where an electrochemical reaction occurs and is disposed inside the battery housing 220.

The battery housing 220 forms an accommodating space for accommodating the electrode assembly 230, an electrolyte, and other components by closing an opening using the positive end cover as the first wall 210 and the negative electrode end cover 240. A condition where the first wall 210 is the positive end cover is exemplified, but the first wall 210 is also capable of being the negative electrode end cover or simultaneously both the positive end cover and the negative electrode end cover, and is not particularly limited herein. Optionally, under the condition that the first wall 210 is only one of the positive end cover and the negative electrode end cover, the other of the positive end cover and the negative electrode end cover is either a component separate from the battery housing 220 or integrated with the battery housing 220.

Optionally, the battery cell 200 further includes a sealing nail 260 made of a material including plastic and a fixing member 250 configured to prevent the sealing nail 260 from detaching from a pole body 110, for example, as shown in FIG. 3. The sealing nail 260 is configured to seal an electrolyte injection hole after injection of the electrolyte through the electrolyte injection hole formed in the pole body 110, thereby preventing the electrolyte from leaking to an exterior through the electrolyte injection hole. Optionally, the fixing member 250 is made of a conductive material (for example, aluminum). For example, after inserting the sealing nail 260 into the electrolyte injection hole, the fixing member 250 is welded to the pole body 110, thereby preventing the sealing nail 260 from detaching from the pole body 110.

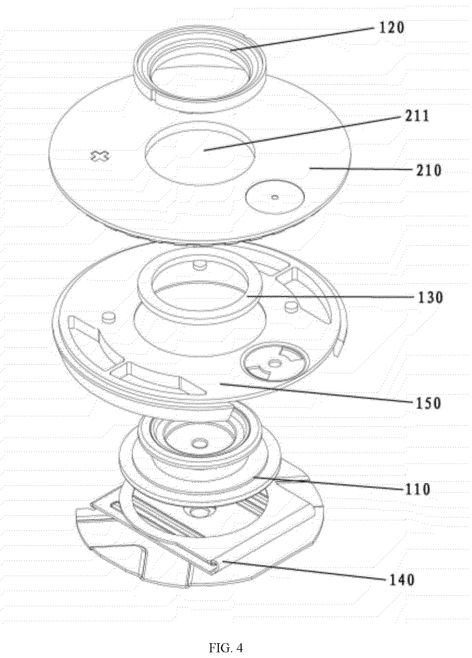

As shown in FIGs. 4 to 17The pole assembly 100 includes a pole body 110. Optionally, the pole assembly 100 may further include a first insulating member 120 configured to insulate the pole body 110 from the first wall 210, a sealing member 130 configured to prevent electrolyte leakage, and a second insulating member 150 configured to insulate the pole body 110 from the first wall 210. The pole body 110 includes a bearing portion 111 and a bending portion 112. The bending portion 112, for example, is formed into a cylindrical shape by being enclosed by a bending wall and is provided with a riveting hole for pressing a rivet. The bending portion 112 is bent by pressing the rivet into the riveting hole and performing riveting. The bearing portion 111, for example, is formed into a cylindrical shape by being enclosed by a bearing wall and is connected to the bending portion 112 at one end in a central axis direction C.

Additionally, as shown in FIGs. 8 to 15, in some embodiments, the pole body 110 further includes a holding portion 114, where the holding portion 114 is disposed at an end of the bearing portion 111 on a side opposite the bending portion 112 and extending in a direction substantially perpendicular to the central axis direction C. The holding portion 114 and the bending portion 112 secure the first wall 210 from two sides.

An example of installation steps for installing the pole assembly 100 on the battery cell 200 is described below. It should be noted that the order of the installation steps is not particularly limited and is capable of being adjusted according to actual conditions.

As shown in FIGs. 3 and 4, the holding portion 114 of the pole body 110 is fixed to an adapter 140, for example, by a method including welding. Additionally, optionally, under the condition that the pole body 110 does not have a holding portion 114, the bearing portion 111 is directly fixed to the adapter 140. The sealing member 130 and the second insulating member 150 are respectively fitted over the pole body 110, and the pole body 110 fitted with the sealing member 130 and the second insulating member 150 is inserted into a mounting hole 211 of the first wall 210 from a side of the first wall 210 facing a side (that is, interior) of the battery cell 200, namely an inner side, so that the bearing portion 111 of the pole body 110 is inserted through the mounting hole 211, and the second insulating member 150 abuts against the inner side of the first wall 210. In this state, the bending portion 112 extends to an outer side of the first wall 210. The first insulating member 120 is fitted over the pole body 110 from the outer side of the first wall 210, for example, reaching a state as shown in FIGs. 9, 10, 12, and 14. Optionally, the pole body 110 in this state is riveted, for example, by inserting a rivet into the riveting hole of the bending portion 112 to bend the bending portion 112. As the riveting process progresses, the bending portion 112 bends and becomes in contact with the first wall 210 via the first insulating member 120, reaching a state as shown in FIGs. 8, 11, 13, and 15. Thus, the installation of the pole assembly 100 on the first wall 210 is achieved. For example, after the pole assembly 100 is installed on the first wall 210, the adapter 140 is electrically connected to the electrode assembly 230, and the electrode assembly 230 and the first wall 210 are together disposed in the battery housing 220 of the battery cell 200. After performing fixing and sealing as needed, the installation of the pole assembly 100 on the battery cell 200 is completed.

As shown in FIGs. 8 to 15, in some embodiments, optionally, in the central axis direction C of the bearing portion 111, a flange portion 111a is disposed at a position at a certain distance from an end of the bearing portion 111 away from the bending portion 112, and an electrolyte injection hole for injecting the electrolyte is formed in the flange portion 111a. After completing the installation of the pole assembly 100 on the battery cell 200 and injecting the electrolyte through the electrolyte injection hole, a sealing nail 260 is inserted into the electrolyte injection hole for sealing, and a fixing member 250 is fixed to the pole body 110, for example, by a method including welding to prevent the sealing nail 260 from detaching from the electrolyte injection hole. In the foregoing structure, since the flange portion 111a is disposed at a position at a certain distance from the end of the bearing portion 111 away from the bending portion 112, it is equivalent to lifting a bottom wall of the bearing portion 111. Thus, a bending resistance strength of the bearing portion 111 can be enhanced, making the bearing portion 111 less prone to bending deformation during riveting.

Additionally, in some embodiments, as shown in FIGs. 8 to 15, a minimum thickness t1 of the bearing portion 111 is greater than a maximum thickness t2 of the bending portion 112. For example, a minimum thickness t1 of a bearing wall constituting the bearing portion 111 is greater than a maximum thickness of a bending wall constituting the bending portion 112. To make the minimum thickness t1 of the bearing portion 111 greater than the maximum thickness t2 of the bending portion 112, a thinning groove 112a is disposed on at least one side of the bending portion 112 in a direction substantially perpendicular to the central axis direction C. For example, when observed in a direction substantially perpendicular to the central axis direction C, namely a cross-sectional direction, an outer peripheral dimension of the bearing portion 111 is the same as an outer peripheral dimension of the bending portion 112 before bending, and an inner peripheral dimension of the bearing portion 111 is less than an inner peripheral dimension of the bending portion 112 before bending, meaning that an inner wall portion of the bending wall of the bending portion 112 is thinned, as shown in FIG. 9; or an inner peripheral dimension of the bearing portion 111 is the same as an inner peripheral dimension of the bending portion 112 before bending, and an outer peripheral dimension of the bearing portion 111 is greater than an outer peripheral dimension of the bending portion 112 before bending, meaning that an outer wall portion of the bending wall of the bending portion 112 is thinned, as shown in FIGs. 10 and 11; or an outer peripheral dimension of the bearing portion 111 is greater than an outer peripheral dimension of the bending portion 112 before bending, and an inner peripheral dimension of the bearing portion 111 is less than an inner peripheral dimension of the bending portion 112 before bending, meaning that both inner and outer wall portions of the bending wall of the bending portion 112 are thinned, as shown in FIG. 12. Additionally, in some embodiments, to make the minimum thickness t1 of the bearing portion 111 greater than the maximum thickness t2 of the bending portion 112, a thickness of the bearing wall constituting the bearing portion 111 may alternatively be appropriately increased.

As shown in FIGs. 8 to 15, under the condition that the minimum thickness t1 of the bearing portion 111 is greater than the maximum thickness t2 of the bending portion 112, a ratio of the maximum thickness t2 of the bending portion 112 to the minimum thickness t1 of the bearing portion 111 may be within a range of 0 to 0.85, for example, 0.45. Further, the ratio of the thickness t2 of the bending portion 112 to the thickness t1 of the bearing portion 111 may be within a range of 0.3 to 0.7, for example, 0.4.

Additionally, in some embodiments, as shown in FIGs. 16 and 17, reinforcing ribs 111b are disposed on an inner side of the bearing portion 111. A plurality of the reinforcing ribs 111b are disposed at intervals along a circumferential direction of the bearing portion 111 and extend in the central axis direction C to a connection portion between the bearing portion 111 and the bending portion 112. Disposing the reinforcing ribs 111b can effectively enhance the bending resistance strength of the bearing portion 111.

Additionally, in some embodiments, as shown in FIGs. 14 and 15, a bending groove 113 is formed at a connection portion between the bending portion 112 and the bearing portion 111. The bending groove 113 enables the bending portion 112 to be bent outward during a riveting process and can accommodate deformation of the bending portion 112 during riveting. Under the condition that the bending groove 113 is provided, a thickness of the bending portion 112 may alternatively be not thinned, or a thickness of the bearing portion 111 may be increased. Optionally, a thickness of the bearing portion 111 may be substantially the same as a thickness of the bending portion 112.

Additionally, in some embodiments, as shown in FIGs. 8 and 9, in the central axis direction C of the bearing portion 111, a distance H between a connection surface S1 of the bending portion 112 and the bearing portion 111 and an abutting surface S2 of a second portion 122 may be within a range of -5 mm to +5 mm, and optionally, within a range of -2 mm to +2 mm. Additionally, in some embodiments, as shown in FIGs. 8 and 9, in a state where the bending portion 112 is bent to be in contact with the first wall 210, the distance H between the connection surface S1 of the bending portion 112 and the bearing portion 111 and the abutting surface S2 of the second portion 122 may be within a range of -5 mm to +5 mm, and optionally, within a range of -2 mm to +2 mm.

In this way, the above structure can alleviate problems of insufficient pressing or excessive pressing due to setting the distance H between the connection surface S1 and the abutting surface S2 outside a suitable range, thereby increasing the yield rate when the pole assembly is disposed and enhancing the safety and reliability of the battery cell.

Although this application has been described with reference to some preferred embodiments, various modifications to this application and replacements of the components therein with equivalents can be made without departing from the scope of this application. In particular, provided that there is no structural conflict, the various technical features mentioned in the embodiments can be combined in any manner. This application is not limited to the specific embodiments disclosed in this specification but includes all technical solutions falling within the scope of the claims.

## Claims

1. A battery cell (200) having a battery housing (220), wherein a pole assembly (100) is disposed on a first wall (210) of the battery housing (220), the pole assembly (100) comprises a pole body (110), and the pole body (110) comprises:
a bearing portion (111), the bearing portion (111) being inserted through a mounting hole (211) of the first wall (210); and
a bending portion (112), the bending portion (112) being connected to one end of the bearing portion (111) in a central axis direction (C), bent relative to the bearing portion (111), and disposed on one side of the first wall (210), and a bending resistance strength of the bending portion (112) being less than a bending resistance strength of the bearing portion (111).

2. The battery cell (200) according to claim 1, wherein
a minimum thickness (t1) of the bearing portion (111) is greater than a maximum thickness (t2) of the bending Portion (112).

3. The battery cell (200) according to claim 1 or 2, wherein
a ratio of the maximum thickness (t2) of the bending portion (112) to the minimum thickness (t1) of the bearing portion (111) is within a range of 0 to 0.85.

4. The battery cell (200) according to any one of claims 1 to 3, wherein
the ratio of the maximum thickness (t2) of the bending portion (112) to the minimum thickness (t1) of the bearing portion (111) is within a range of 0.3 to 0.7.

5. The battery cell (200) according to any one of claims 1 to 4, wherein
a thinning groove (112a) is disposed on at least one side of the bending portion (112) in a direction substantially perpendicular to the central axis direction (C).

6. The battery cell (200) according to any one of claims 1 to 5, wherein
a bending resistance reinforcement portion is disposed on the bearing portion (111).

7. The battery cell (200) according to claim 6, wherein
the bending resistance reinforcement portion comprises a flange portion (111a) extending from an inner surface of the bearing portion (111) toward a center of the bearing portion (111).

8. The battery cell (200) according to claim 7, wherein
the flange portion (111a) is disposed on the inner surface of the bearing portion (111) in a manner of surrounding an entire circumference.

9. The battery cell (200) according to claim 7 or 8, wherein
in the central axis direction (C), the flange portion (111a) is at a certain distance from an end of the bearing portion (111) away from the bending portion (112).

10. The battery cell (200) according to any one of claims 7 to 9, wherein
at least a part of the flange portion (111a) is located within the mounting hole (211).

11. The battery cell (200) according to any one of claims 7 to 10, wherein
the pole body (110) further comprises a holding portion (114) connected to the bearing portion (111), the holding portion (114) and the bending portion (112) are respectively disposed on two sides of the first wall (210), and the flange portion (111a) is spaced apart from the holding portion (114).

12. The battery cell (200) according to any one of claims 6 to 11, wherein
the bending resistance reinforcement portion comprises reinforcing ribs (111b) disposed on an inner side of the bearing portion (111), the reinforcing ribs (111b) extend in the central axis direction (C), and a plurality of the reinforcing ribs (111b) are disposed at intervals along a circumferential direction of the bearing portion (111).

13. The battery cell (200) according to claim 12, wherein
the reinforcing ribs (111b) extend to a connection portion between the bearing portion (111) and the bending portion (112).

14. The battery cell (200) according to any one of claims 1 to 13, wherein
a bending resistance weakening portion is disposed at a connection portion between the bending portion (112) and the bearing portion (111), and the bending portion (112) is bent from the bending resistance weakening portion.

15. The battery cell (200) according to claim 14, wherein
the bending resistance weakening portion is a bending groove (113) or a connecting member made of a material with a lower bending resistance strength.

16. The battery cell (200) according to any one of claims 1 to 15, wherein
the pole assembly (100) further comprises a first insulating member (120) surrounding an outer side of the pole body (110), and the first insulating member (120) comprises a first portion (121) and a second portion (122), wherein
the first portion (121) is inserted into the mounting hole (211) of the first wall (210), the second portion (122) is connected to the first portion (121), and the second portion (122) is sandwiched between the bending portion (112) and the first wall (210).

17. The battery cell (200) according to claim 16, wherein
an inner peripheral dimension of the second portion (122) is greater than an inner peripheral dimension of the first portion (121).

18. The battery cell (200) according to claim 16 or 17, wherein
the bending portion (112) and the bearing portion (111) are connected at a connection surface (S1), the bending portion (112) abuts against an abutting surface (S2) of the second portion (122), and in the central axis direction (C), a distance (H) between the connection surface (S1) and the abutting surface (S2) is within a range of -5 mm to +5 mm.

19. The battery cell (200) according to any one of claims 16 to 18, wherein
the bending portion (112) and the bearing portion (111) are connected at a connection surface (S1), the bending portion (112) abuts against an abutting surface (S2) of the second portion (122), and in the central axis direction (C), a distance (H) between the connection surface (S1) and the abutting surface (S2) is within a range of -2 mm to +2 mm.

20. The battery cell (200) according to any one of claims 16 to 19, wherein
the second portion (122) is formed with a protruding portion (123), and the protruding portion (123) surrounds the bending portion (112).

21. The battery cell (200) according to any one of claims 1 to 20, wherein
the pole body (110) is provided with a holding portion (114) at the other end of the bearing portion (111) in the central axis direction (C), and the holding portion (114) and the bending portion (112) secure the first wall (210) from two sides.

22. The battery cell (200) according to claim 21, wherein
the pole assembly (100) further comprises a sealing member (130), wherein the sealing member (130) is disposed between the holding portion (114) and the first wall (210), sealing the bearing portion (111) and the first wall (210).

23. The battery cell (200) according to any one of claims 21 and 22, wherein
the holding portion (114) is located inside the battery housing (220) of the battery cell (200).

24. The battery cell (200) according to any one of claims 21 to 23, wherein
the pole assembly (100) further comprises a second insulating member (150), wherein the second insulating member (150) is disposed between the holding portion (114) and the first wall (210).

25. The battery cell (200) according to any one of claims 1 to 24, wherein
the battery cell (200) further comprises an adapter (140), the pole body (110) is fixed to the adapter (140), and the adapter (140) electrically connects the pole body (110) and an electrode assembly (230) of the battery cell (200).

26. The battery cell (200) according to any one of claims 1 to 25, wherein
the battery housing (220) comprises a shell and an end cover, and the first wall (210) is the shell and/or the end cover.

27. A battery comprising the battery cell (200) according to any one of claims 1 to 26.

28. An electric device comprising the battery according to claim 27, wherein the battery is configured to supply power to the electric device.
